# EUROPEAN PATENT APPLICATION

(11) **EP 4 675 649 A1**
(43) Date of publication of application: **07.01.2026**
(21) Application number: 24198108.3
(22) Date of filing: 03.09.2024
(51) Int. Cl.: H01B 7/32, H02S 40/34, H01B 7/08, H01B 7/36

(54) **PHOTOVOLTAIC SYSTEM AND TRANSITION CABLE**

(30) Priority: 01.07.2024 CN 202421542875 U
(71) Applicant: Sunshare Power Technology Co., Ltd., Nanjing Jiangsu 211153 (CN)
(72) Inventor: XU, Qihui, Nanjing, 211153 (CN); ZHANG, Yuehuo, Nanjing, 211153 (CN); KANG, Ming, Nanjing, 211153 (CN); HE, Peng, Nanjing, 211153 (CN); CHEN, Lei, Nanjing, 211153 (CN); ZHENG, Benben, Nanjing, 211153 (CN); WANG, Linchun, Nanjing, 211153 (CN)
(74) Representative: Rooney, John-Paul

(57) **Abstract**

A photovoltaic system and a transition cable are provided. The photovoltaic system includes a photovoltaic module, an inverter, a transition cable, and a power supply connector. One end of the inverter is electrically connected to the photovoltaic module, and another end of the inverter is provided with a power generation end insertion connector. Both ends of the transition cable are provided with a first insertion connector and a second insertion connector, respectively. The first insertion connector is connected to the power generation end insertion connector by insertion, and the transition cable is configured to run from outdoors to indoors. One end of the power supply connector is provided with a power supply end insertion connector, and the second insertion connector is connected to the power supply end insertion connector by insertion. According to the photovoltaic system and the transition cable in the present application, each of the both ends of the transition cable is provided with the insertion connector, and the transition cable runs from outdoors to indoors, which makes the transition cable can be quickly dismounted, thereby facilitating maintenance of the photovoltaic system. Moreover, the transition cable with the specific structure runs from outdoors to indoors, which makes the installation of the photovoltaic system more convenient.

## Description

### FIELD

The present application relates to the technical field of photovoltaic technologies, and in particular to a photovoltaic system and a transition cable.

### BACKGROUND

A common home photovoltaic system involves an outdoor photovoltaic module being mounted on an outdoor balcony of a house and connected to an indoor home grid. In the home photovoltaic system, the outdoor photovoltaic module and the indoor home grid are generally connected to each other through a cable. When running from outdoors to indoors, the cable usually needs to pass through doors or windows, and the cable is apt to be squeezed or worn due to opening or closing of the door or window, leading to safety hazards.

### SUMMARY

An object of the present application is to solve at least one of technical problems in the conventional technology. In view of this, a photovoltaic system and a transition cable are provided according to the present application. With an insertion connector being provided at each of both ends of the transition cable running from outdoors to indoors, the transition cable can be quickly dismounted, thereby facilitating maintenance of the photovoltaic system. Moreover, the transition cable with the specific structure runs from outdoors to indoors, which makes the installation of the photovoltaic system more convenient.

In a first aspect of the present application, a photovoltaic system is provided, including a photovoltaic module, an inverter, a transition cable, and a power supply connector, where
one end of the inverter is electrically connected to the photovoltaic module, and another end of the inverter is provided with a power generation end insertion connector;
both ends of the transition cable are provided with a first insertion connector and a second insertion connector respectively, the first insertion connector is connected to the power generation end insertion connector by insertion, and the transition cable is configured to run from outdoors to indoors; and
one end of the power supply connector is provided with a power supply end insertion connector, and the second insertion connector is connected to the power supply end insertion connector by insertion.

According to the photovoltaic system in the present application, each of the both ends of the transition cable is provided with the insertion connector, and the transition cable runs from outdoors to indoors. In this way, the transition cable can be quickly dismounted, thereby facilitating maintenance of the photovoltaic system. Moreover, the transition cable with the specific structure runs from outdoors to indoors, which makes the installation of the photovoltaic system more convenient.

In an embodiment, the transition cable includes a cable core and multiple layers of cable sheaths wrapping around the cable core, and at least two layers of the multiple layers of cable sheaths have different colors.

In an embodiment, the transition cable includes a cable core, a first cable sheath wrapping around the cable core, a second cable sheath wrapping around the first cable sheath, and a third cable sheath wrapping around the second cable sheath, and colors of the first cable sheath, the second cable sheath, and the third cable sheath are different from one another.

In an embodiment, a cross-section of the transition cable is flat.

In an embodiment, the cable core of the transition cable includes multiple wires, and the multiple wires are woven into a mesh or arranged in parallel.

In an embodiment, a diameter of each of the multiple wires is smaller than or equal to 0.15 mm.

In an embodiment, the transition cable extends along a surface of a frame of a door or a window.

In a second aspect of the present application, a transition cable is provided, and is applied to a photovoltaic system.

According to the transition cable in the present application, with the arrangement of the insertion connectors provided at both ends of the transition cable, the mounting and dismounting of the transition cable are easier, and electrical isolations and protections can be realized. The multiple layers of cable sheaths wrapping around a cable core of the transition cable are designed to have different colors for warning, so that the damaged transition cable can be identified by the naked eye. Moreover, the transition cable is designed to be flat, and therefore the transition cable can run from outdoors to indoors through a gap of the door or window.

In an embodiment, the transition cable is configured to run from outdoors to indoors, and both ends of the transition cable are provided with a first insertion connector and a second insertion connector respectively; and
the first insertion connector is configured to be connected to a power supply end insertion connector located outdoors by insertion, and the second insertion connector is configured to be connected to another power supply end insertion connector located indoors by insertion.

In an embodiment, the transition cable includes a cable core and multiple layers of cable sheaths wrapping around the cable core, and at least two layers of the multiple layers of cable sheaths have different colors.

In an embodiment, a cross-section of the transition cable is flat.

A part of additional aspects and advantages of the present application will be described in the descriptions hereinafter, which will become apparent in the descriptions hereinafter, or will be understood through practice of the present application.

### BRIEF DESCRIPTION OF THE DRAWINGS

For more clearly illustrating embodiments of the present application or technical solutions in the conventional technology, drawings referred to for describing the embodiments or the conventional technology will be briefly described hereinafter. Apparently, the drawings in the following description are only some embodiments of the present application, and for those skilled in the art, other drawings may be obtained based on these drawings without any creative efforts.
FIG. 1 is a schematic view showing the structure of a photovoltaic system according to an embodiment of the present application;
FIG. 2 is a schematic partial view showing the structure of a transition cable according to an embodiment of the present application; and
FIG. 3 is a schematic view showing the structure of a transition cable passing through a door or a window according to an embodiment of the present application.

### Reference numerals:

| | | | |
|---|---|---|---|
| 1 | photovoltaic system, | 10 | photovoltaic module, |
| 20 | inverter, | | |
| 21 | power generation end insertion connector, | | |
| 30 | transition cable, | 31 | first insertion connector, |
| 32 | second insertion connector, | 33 | cable core, |
| 34 | first cable sheath, | 35 | second cable sheath, |
| 36 | third cable sheath, | 40 | power supply connector, |
| 2 | frame of door or window. | | |

### DETAILED DESCRIPTION OF THE EMBODIMENTS

Embodiments of the present application are described in detail hereinafter, and examples of the embodiments are shown in the accompanying drawings. Same or similar reference numerals always represent the same or similar elements or elements having the same or similar functions. The embodiments described hereinafter with reference to the accompanying drawings are exemplary, and are only used for illustration of the present application, which should not be construed as a limitation to the present application.

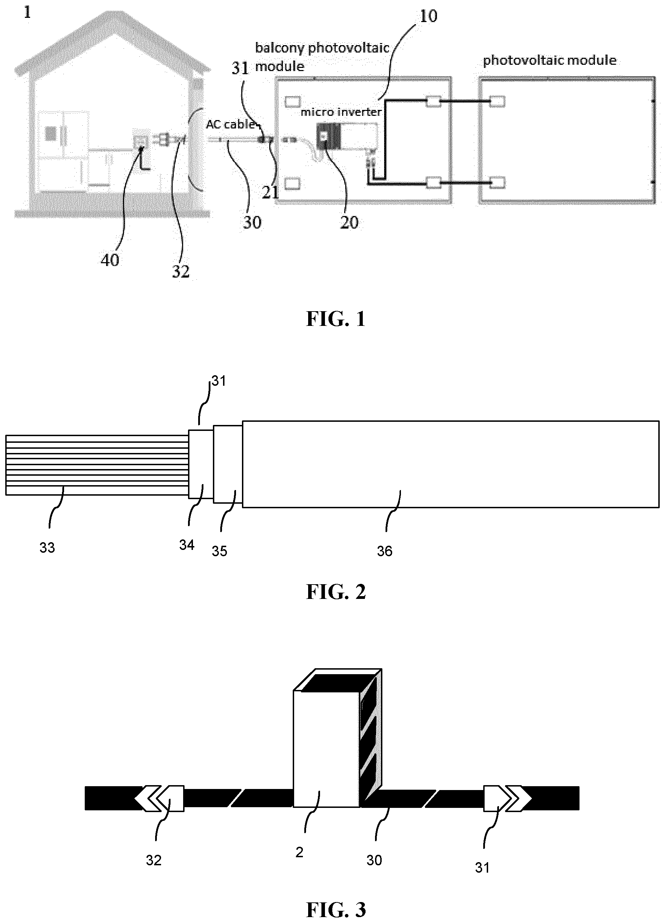

A photovoltaic system and a transition cable according to the embodiments of the present application are described with reference to FIG. 1 to FIG. 3.

As shown in FIG. 1, a photovoltaic system 1 according to an embodiment of the present application includes a photovoltaic module 10, an inverter 20, a transition cable 30, and a power supply connector 40.

The photovoltaic module 10 is located outdoors, and is configured to convert solar energy to electrical energy. It should be understood that, the photovoltaic module 10 of the photovoltaic system 1 is used to supply power to an indoor home grid.

As shown in FIG. 1, one end of the inverter 20 is electrically connected to the photovoltaic module 10, and the another end of the inverter 20 is provided with a power generation end insertion connector 21.

In the photovoltaic system 1, the inverter 20 is configured to convert a direct current generated by the photovoltaic module 10 to an alternating current, and the alternating current converted by the inverter 20 is connected to the home grid through an appropriate connecting device. That is, the one end of the inverter 20 is electrically connected to the photovoltaic module 10, to ensure the power generated by the photovoltaic module 10 to be successfully transmitted to the inverter 20 for conversion, and finally connected to the home grid.

The another end of the inverter 20 is provided with the power generation end insertion connector 21, so that the inverter 20 can be connected to an insertion connector of the transition cable 30 or other devices by insertion.

As shown in FIG. 1, two ends of the transition cable 30 are respectively provided with a first insertion connector 31 and a second insertion connector 32, and the first insertion connector 31 is connected to the power generation end insertion connector 21 by insertion. As shown in FIG. 3, the transition cable 30 is configured to run from outdoors to indoors.

Both ends of the transition cable 30 are provided with the insertion connectors, to simplify the connection between the transition cable 30 and the inverter 20 or other devices. When the transition cable 30 is expected to be replaced, the transition cable 30 can be dismounted only by disconnecting the first insertion connector 31 as well as the second insertion connector 32, making the maintenance of the system more convenient.

The first insertion connector 31 is connected to the power generation end insertion connector 21 of the inverter 20 by insertion. That is, the power generated by the photovoltaic module 10 and converted to the alternating current by the inverter 20 can be transmitted through the transition cable 30, and finally connected to the home grid.

With the transition cable 30 running from outdoors to indoors, the problem that the power generated by the outdoor photovoltaic module 10 is expected to be transmitted to the indoors safely and effectively to be connected to the home grid is solved.

As shown in FIG. 3, the transition cable 30 may be flat or may be of other shapes. For example, if the transition cable 30 is flat, the transition cable 30 of the photovoltaic system 1 can be led to the indoors through a gap of a door or window, to allow the transition cable 30 to run from outdoors to indoors without the necessity of providing an additional hole in a wall for the transition cable 30 to pass through.

As shown in FIG. 1, one end of the power supply connector 40 is provided with a power supply end insertion connector, and the second insertion connector 32 is connected to the power supply end insertion connector by insertion.

The power supply connector 40 is a grid connection point at which the photovoltaic system 1 is connected to the home grid. Electrical isolations and protections may be provided inside the power supply connector 40 to prevent the power of the photovoltaic system 1 from impacting or damaging the home grid. Moreover, the power supply connector 40 may have the ability of protecting the photovoltaic system 1 from being affected by a potential electrical fault in the home grid.

With the insertion connection between the power supply end insertion connector of the power supply connector 40 and the second insertion connector 32 of the transition cable 30, the mounting process of connection between the transition cable 30 and the power supply connector 40 is simplified, and the power in the transition cable 30, which has been converted into the alternating current, can be selectively connected to the home grid.

In the conventional technology, some solutions that a cable connected to the inverter of the photovoltaic module passes through the wall to be connected to the grid connection point of the indoor home grid have been provided, to solve the problem of power supply from the outdoor photovoltaic module to the indoor home grid. It has been found from researches that, in the conventional technology, on the one hand, a specific position, such as a round hole, is generally provided on the wall for the cable to pass through, causing high construction cost. On the other hand, it is cumbersome to dismount and mount the cable when the cable is damaged, making the maintenance difficult.

In practice, according to the photovoltaic system 1 provided in the embodiments of the present application, the power generated by the outdoor photovoltaic module 10 is transmitted to the indoor home grid through the inverter 20, the transition cable 30, and the power supply connector 40. The inverter 20 is configured to convert the direct current generated by the photovoltaic module 10 to the alternating current, and is connected to the first insertion connector 31 of the transition cable 30 through the power generation end insertion connector 21. The first insertion connector 31 at the one end of the transition cable 30 is connected to the power generation end insertion connector 21 of the inverter 20, and the transition cable 30 that is flat or of other shapes can run from outdoors to indoors through the gap of the door or window. The second insertion connector 32 at the other end of the transition cable 30 is connected to the power supply end insertion connector of the power supply connector 40, to transmit the power to the home grid.

According to the photovoltaic system 1 provided in the embodiments of the present application, the transition cable 30 having the insertion connectors at both ends runs from outdoors to indoors. In this way, the transition cable 30 can be quickly dismounted, thereby facilitating maintenance of the photovoltaic system 1. Moreover, with specific structural design, the transition cable 30 runs from outdoors to indoors, making the installation of the photovoltaic system 1 easier.

In some embodiments, as shown in FIG. 2, the transition cable 30 includes a cable core 33 and multiple layers of cable sheaths wrapping around the cable core 33, where at least two of the multiple layers of cable sheaths have different colors.

The transition cable 30 may be provided with two or more cable sheaths of different colors. When an outer cable sheath is damaged, an inner cable sheath is exposed, and the change of the color can be immediately observed by the naked eye. That is, the damaged transition cable 30 can be identified quickly, so as to ensure the safety of the photovoltaic system 1.

In some embodiments, as shown in FIG. 2, the transition cable 30 includes the cable core 33, a first cable sheath 34 wrapping around the cable core 33, a second cable sheath 35 wrapping around the first cable sheath 34, and a third cable sheath 36 wrapping around the second cable sheath 35, and colors of the first cable sheath 34, the second cable sheath 35, and the third cable sheath 36 are all different from one another.

The first cable sheath 34 contacts the cable core 33, to perform basic insulation function. The second cable sheath 35 wraps around the first cable sheath 34, to enhance the insulation performance. The color of the second cable sheath 35 is different from the color of the first cable sheath 34. The third cable sheath 36 is at an outermost layer, and may be made of a material that has high compressive resistance and good weatherability. That is, the third cable sheath 36 can bear the compression by opening and closing of the door or window, and can resist negative factors such as ultraviolet lights, high temperature, humidity and the like. The color of the third cable sheath 36 is different from both the color of the second cable sheath 35 and the color of the first cable sheath 34.

With such arrangement of the colors, if the third cable sheath 36 of the cable is damaged, the second cable sheath 35 is exposed, that is, different colors of the cable sheaths can be observed by the naked eye, which forms a warning to draw the attention of relevant people. If the second cable sheath 35 is damaged, the first cable sheath 34 can be observed by the naked eye. The first cable sheath 34 may be red or of other striking colors to warn the relevant people that the transition cable 30 must be replaced.

With the different colors of the cable sheaths, the relevant people can quickly observe the position and the degree of the cable damage, and take corresponding maintenance actions.

In some embodiments, as shown in FIG. 1 and FIG. 2, a cross-section of the transition cable 30 is flat. Specifically, the cross-section of the transition cable 30 substantially is an oblate rectangle where a length thereof is much greater than a width thereof.

Conductors in the cable core and a shape of the outer cable sheaths may be provided in a way to make the cross-section of the transition cable 30 be flat. The conductor may be a fine wire, and multiple conductors are woven into a mesh or arranged in parallel, so as to reduce a total thickness of the transition cable 30, while the cable core keeps a required width to accommodate enough number of conductors. The shape of the multiple layers of cable sheaths wrapping around the cable core 33 is designed according to the shape of the cable core 33, to ensure the overall shape of the transition cable 30 to be flat.

With the flat cross-section, the transition cable 30 can easily run from outdoors to indoors through a narrow space, such as a gap of the door or window without the necessity of providing an additional hole in the wall, which reduces the construction difficulty and cost. Moreover, the flat cable can be laid along flat surfaces, such as a wall surface and the like, which keeps the outer wall neat.

In some embodiments, as shown in FIG. 2, the cable core 33 of the transition cable 30 includes multiple wires, and the multiple wires are woven into a mesh.

In the cable core 33, the multiple wires may overlap each other in a cross manner or may be arranged in parallel in a specific manner, to form the mesh or a strip structure. The specific weaving manner may be plain weave, twill weave, parallel arrangement or the like. The multiple wires are woven into the mesh or arranged in parallel, thereby achieving a flat design of the cable core 33.

Moreover, the multiple wires are woven into the mesh structure, which keeps relatively good stability when being subjected to an external force, and is adaptive to bending and compressing to some extent.

In some embodiments, as shown in FIG. 2, a diameter of each of the multiple wires is denoted by "d", where d≤0.15 mm.

With a relatively small diameter, the multiple wires are easier to be woven into the mesh structure. Due to the small diameter, the gap between the woven fine wires is small, the wires in the cable core 33 are compact, and it is less likely to break the flatness during weaving.

Furthermore, the fine wires generally have high flexibility. That is, the cable core 33 of the transition cable 30 is more adaptive to various angles when being bent, and the wires are difficult to be broken or damaged.

In some embodiments, as shown in FIG. 3, the transition cable 30 extends along a surface of a frame 2 of the door or window.

The transition cable 30 extends along the surface of the frame 2 of the door or window, which reduces a safety risk caused by accidents such as people colliding with the transition cable 30. Moreover, since the transition cable 30 extends along the surface of the frame 2, the arrangement of the transition cable 30 becomes more orderly. It is easier for the relevant people to find and get access to the transition cable 30, so as to facilitate subsequent replacement and maintenance of the transition cable 30.

It may be appreciated that, with its flat shape, the transition cable 30 runs from outdoors to indoors through the gap at the frame of the door or window.

A transition cable 30 is further provided according to the embodiments of the present application.

In some embodiments, as shown in FIG. 1, a transition cable 30 is applied to the photovoltaic system 1. The transition cable 30 is configured to run from outdoors to indoors. Both ends of the transition cable 30 are respectively provided with a first insertion connector 31 and a second insertion connector 32. The first insertion connector 31 is configured to be connected to a power supply end insertion connector located outdoors, and the second insertion connector 32 is configured to be connected to another power supply end insertion connector located indoors.

It may be appreciated that, the transition cable 30 is used to transmit power from the photovoltaic module 10 to the home grid.

With the design of the first insertion connector 31 and the second insertion connector 32 of the transition cable 30 applied to the photovoltaic system 1, the transition cable 30 can be quickly connected to the inverter 20 of the outdoor photovoltaic module 10 and the indoor power supply connector 40 of the photovoltaic system 1. The connection is realized by insertion of corresponding insertion connectors without additional mounting tools, and therefore the mounting and dismounting of the transition cable 30 are convenient.

Moreover, the first insertion connector 31 and the second insertion connector 32 of the transition cable 30 may be provide with electrical isolations and protections. For example, the insertion connectors may provide protections from overcurrent or overvoltage. When the overcurrent or the overvoltage is identified, the insertion connectors are automatically disconnected, thereby ensuring the safety of the photovoltaic system 1.

In some embodiments, as shown in FIG. 2, the transition cable 30 includes a cable core 33 and multiple layers of cable sheaths wrapping around the cable core 33, and at least two of the multiple layers of cable sheaths have different colors.

It may be appreciated that, the transition cable 30 has the function of identifying the damage according to the difference of colors. That is, if an outer cable sheath is damaged, a color of an inner cable sheath can be observed by the naked eye, thereby warning the relevant people to dismount and replace the transition cable 30.

In some embodiments, as shown in FIG. 1 and FIG. 2, a cross-section of the transition cable 30 is flat.

It may be appreciated that, with the flat shape, the transition cable 30 can easily run from outdoors to indoors through a narrow space, such as a gap of the door or window without the necessity of providing an additional hole in the wall.

According to the transition cable 30 in the embodiments of the present application, with the arrangement of the insertion connectors provided at both ends of the transition cable 30, the mounting and dismounting of the transition cable 30 are easier and electrical isolations and protections can be realized. The multiple layers of cable sheaths wrapping around the cable core 33 of the transition cable 30 are designed to have different colors for warning, so that the damaged transition cable 30 can be identified by the naked eye. Moreover, the transition cable 30 is designed to be flat, and therefore the transition cable 30 can run from outdoors to indoors through the gap of the door or window.

The terms "first", "second", etc. in the specification and claims of the present application are used for distinguishing similar objects, rather than describing a specific order or sequence. It should be understood that, the terms may be interchangeable in appropriate situations, so that the embodiments of the present application can be implemented in an order apart from those illustrated or described here. The objects distinguished by the terms "first", "second", etc. are generally of one type, and the number of objects is not limited. For example, the first object may be one or more. In addition, the term "and/or" in the specification and claims indicates at least one of the objects being connected, and the character "/" generally indicates that the related objects before and after this character are in an "or" relationship.

In the description of the present application, it should be noted that the orientation or positional relationships indicated by terms such as "center", "longitudinal", "transversal", "length", "width", "thickness", "up", "down", "front", "rear", "left", "right", "vertical", "horizontal", "top", "bottom", "inner", "outer", "axial ", "radial", "circumferential" and the like are based on the orientation or positional relationships shown in the drawings, and are merely for the convenience of describing the present application and the simplification of the description, and do not indicate or imply that the device or element referred to must have a particular orientation, or be configured and operated in a particular orientation, which therefore should not be construed as a limitation to the scope of the present application.

In the description of the present application, the terms "first feature" and "second feature" may include one or more such features.

In the description of the present application, the term "multiple" or "plurality of" indicates two or more.

In the description of the present application, a first feature being "on" or "under" a second feature may include that the first feature and the second feature are in direct contact with each other, or may include that the first feature and the second feature are in indirect contact with each other via another feature therebetween.

In the description of the present application, a first feature being "on", "above" or "over" a second feature may include that the first feature is right above or obliquely above the second feature, or simply means that the first feature is located at a higher position than the second feature in a vertical direction.

In the description of this specification, descriptions referring to the terms "one embodiment", "some embodiments", "exemplary embodiment", "example", "specific example", "some examples", etc., mean that specific features, structures, materials or characteristics described in connection with the embodiment or example are included in at least one embodiment of the present application. In this specification, schematic expressions of the above terms do not necessarily refer to the same embodiment or example. Furthermore, the specific features, structures, materials or characteristics described may be combined in any suitable manner in any one or more embodiments or examples.

## Claims

1. A photovoltaic system (1), comprising a photovoltaic module (10), an inverter (20), a transition cable (30), and a power supply connector (40), wherein
one end of the inverter (20) is electrically connected to the photovoltaic module (10), and another end of the inverter (20) is provided with a power generation end insertion connector (21);
both ends of the transition cable (30) are provided with a first insertion connector (31) and a second insertion connector (32), respectively, the first insertion connector (31) is connected to the power generation end insertion connector (21) by insertion, and the transition cable (30) is configured to run from outdoors to indoors; and
one end of the power supply connector (40) is provided with a power supply end insertion connector, and the second insertion connector (32) is connected to the power supply end insertion connector by insertion.

2. The photovoltaic system (1) according to claim 1, wherein the transition cable (30) comprises a cable core (33) and a plurality of layers of cable sheaths wrapping around the cable core (33), wherein at least two layers of the plurality of layers of cable sheaths have different colors.

3. The photovoltaic system (1) according to claim 1, wherein the transition cable (30) comprises a cable core (33), a first cable sheath (34) wrapping around the cable core (33), a second cable sheath (35) wrapping around the first cable sheath (34), and a third cable sheath (36) wrapping around the second cable sheath (35), wherein colors of the first cable sheath (34), the second cable sheath (35), and the third cable sheath (36) are different from one another.

4. The photovoltaic system (1) according to claim 1, wherein a cross-section of the transition cable (30) is flat.

5. The photovoltaic system (1) according to claim 4, wherein the cable core (33) of the transition cable (30) comprises a plurality of wires, and the plurality of wires are woven into a mesh or arranged in parallel.

6. The photovoltaic system (1) according to claim 5, wherein a diameter of each of the plurality of wires is smaller than or equal to 0.15 mm.

7. The photovoltaic system (1) according to any one of claims 1 to 6, wherein the transition cable (30) is configured to extend along a surface of a frame (2) of a door or a window.

8. A transition cable (30), applicable to a photovoltaic system (1), wherein
the transition cable (30) is configured to run from outdoors to indoors, both ends of the transition cable (30) are provided with a first insertion connector (31) and a second insertion connector (32), respectively; and
the first insertion connector (31) is configured to be connected to a power supply end insertion connector located outdoors by insertion, and the second insertion connector (32) is configured to be connected to another power supply end insertion connector located indoors by insertion.

9. The transition cable (30) according to claim 8, comprising a cable core (33) and a plurality of layers of cable sheaths wrapping around the cable core (33), wherein at least two layers of the multiple layers of cable sheaths have different colors.

10. The transition cable (30) according to claim 8, wherein a cross-section of the transition cable (30) is flat.
